(19) Europäisches Patentamt
European Patent Office
Office européen des brevets

(11) **EP 2 669 921 A1**

(12) **EUROPEAN PATENT APPLICATION**

(43) Date of publication:
**04.12.2013 Bulletin 2013/49**

(51) Int Cl.:
***H01H 33/59*** *(2006.01)*

(21) Application number: **12275081.3**

(22) Date of filing: **31.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alstom Technology Ltd
5400 Baden (CH)**

(72) Inventors:
• **Oates, Colin Donald Murray
Brocton, Staffordshire ST17 0TL (GB)**

• **Davidson, Colin Charnock
Stafford ST17 0JZ (GB)**
• **Burnett, Alistair
Tywyn LL36 9PS (GB)**

(74) Representative: **Potter Clarkson LLP
The Belgrave Centre
Talbot Street
Nottingham
NG1 5GG (GB)**

(54) **Circuit breaker apparatus**

(57) A circuit breaker apparatus (32) comprises one module (30) or a plurality of series-connected modules (30),
the or each module (30) including: first and second conduction paths (34,36); and first and second terminals (38,40) for connection to an electrical network (42), each conduction path (34,36) extending between the first and second terminals (38,40);
the first conduction path (34) including a first mechanical switching element (52) to selectively close to allow current to flow between the first and second terminals (38,40) through the first conduction path (34) in a first mode of operation, or open to block current from flowing between the first and second terminals (38,40) through the first conduction path (34) in a second mode of operation;
the second conduction path (36) including a second mechanical switching element (56) to selectively open to block current from flowing between the first and second terminals (38,40) through the second conduction path (36) in the first mode of operation, or close to allow current to flow between the first and second terminals (38,40) through the second conduction path (36) in the second mode of operation, wherein the first and second mechanical switching elements (34,36) define a break-before-make switching arrangement;
the second conduction path (36) further including a primary energy storage device (74) to oppose current flowing between the first and second terminals (38,40) through the second conduction path (36) in the second mode of operation; and
the or each module (30) further including a commutation circuit (72) to establish a resonant current in the first mechanical switching element to quench an arc current appearing across the first mechanical switching element (52) in the second mode of operation.

Figure 1

EP 2 669 921 A1

## Description

This invention relates to a circuit breaker apparatus for use in high voltage direct current (HVDC) power transmission.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies. In any such power transmission network, converters are required at each interface between AC and DC power to effect the required conversion.

HVDC converters are vulnerable to DC side faults or other abnormal operating conditions that can present a short circuit with low impedance across the DC power transmission lines or cables. Such faults can occur due to damage or breakdown of insulation, lightning strikes, movement of conductors or other accidental bridging between conductors by a foreign object.

The presence of low impedance across the DC power transmission lines or cables can be detrimental to a HVDC converter. Sometimes the inherent design of the converter means that it cannot limit current under such conditions, resulting in the development of a high fault current exceeding the current rating of the HVDC converter. Such a high fault current not only damages components of the HVDC converter, but also results in the HVDC converter being offline for a period of time. This results in increased cost of repair and maintenance of damaged electrical apparatus hardware, and inconvenience to end users relying on the working of the electrical apparatus. It is therefore important to be able to interrupt the high fault current as soon as it is detected.

A conventional means of protecting a HVDC converter from DC side faults, whereby the converter control cannot limit the fault current by any other means, is to trip an AC side circuit breaker, thus removing the supply of current that feeds the fault through the HVDC converter to the DC side. This is because there are currently no available HVDC circuit breaker designs. Furthermore, almost all HVDC schemes are currently point-to-point schemes with two HVDC converters connected to the DC side, whereby one HVDC converter acts as a power source with power rectification capability and the other HVDC converter acts as a power load with power inversion capability. Hence, tripping the AC side circuit breaker is acceptable because the presence of a fault in the point-to-point scheme requires interruption of power flow to allow the fault to be cleared.

A new class of HVDC power transmission networks are being considered for moving large quantities of power over long distances, as required by geographically dispersed renewable forms of generation, and to augment existing capabilities of AC power transmission networks with smartgrid intelligence and features that are able to support modern electricity trading requirements.

Such a HVDC power transmission network requires multi-terminal interconnection of HVDC converters, whereby power can be exchanged on the DC side using three or more HVDC converters operating in parallel. Each HVDC converter acts as either a source or sink to maintain the overall input-to-output power balance of the network whilst exchanging the power as required. Faults in the HVDC power transmission network need to be quickly isolated and segregated from the rest of the network in order to enable the network to resume normal power transmission as soon as possible.

Current interruption in conventional circuit breakers is carried out when the current reaches a current zero, so as to considerably reduce the difficulty of the interruption task. Thus, in conventional circuit breakers, there is a risk of damage to the current interruption apparatus if a current zero does not occur within a defined time period for interrupting the current. It is therefore inherently difficult to carry out DC current interruption because, unlike AC current in which current zeros naturally occur, DC current cannot naturally reach a current zero.

EP 0 867 998 B1 discloses a conventional, solid-state DC circuit breaker comprising a stack of series-connected IGBTs in parallel with a metal-oxide surge arrester. This solution achieves a response time in the range of a few milliseconds but suffers from high steady-state power losses.

According to an aspect of the invention, there is provided a circuit breaker apparatus comprising a module, the module including first and second conduction paths and first and second terminals for connection to an electrical network, each conduction path extending between the first and second terminals;

the first conduction path including a first mechanical switching element to selectively close to allow current to flow between the first and second terminals through the first conduction path in a first mode of operation, or open to block current from flowing between the first and second terminals through the first conduction path in a second mode of operation;

the second conduction path including a second mechanical switching element to selectively open to block current from flowing between the first and second terminals through the second conduction path in the first mode of operation, or close to allow current to flow between the first and second terminals through the second conduction path in the second mode of operation, wherein the first and second mechanical switching elements define a break-before-make switching arrangement;

the second conduction path further including a primary energy storage device to oppose current flowing between the first and second terminals through the second conduction path in the second mode of operation; and the module further including a commutation circuit to establish a resonant current in the first mechanical switching element to quench an arc current appearing across the first mechanical switching element in the second mode of operation.

In use, the circuit breaker apparatus may be connected in series with a DC network, and may be further connected in series with a conventional AC circuit breaker or disconnector. Connecting the circuit breaker apparatus to the DC network, closing the first mechanical switching element of the module and opening the second mechanical switching element of the module causes a load current to flow through the first conduction path of the module during normal power transmission in the DC network.

In the event of a fault occurring in the DC network resulting in high fault current in the first conduction path of the module, the first mechanical switching element of the module is opened. This results in formation of an arc current between contact elements of the first mechanical switching element of the module. The second mechanical switching element of the module is then closed, and the commutation circuit of the module establishes a resonant current in the first mechanical switching element that opposes the arc current. The resonant current will rise until it is equal in magnitude to the arc current. At this instant the resonant and arc currents cancel out, resulting in quenching of the arc current across the first mechanical switching element of the module.

Quenching the arc current across the first mechanical switching element of the module diverts the fault current into the second conduction path. This allows the primary energy storage device of the module to charge in order to provide an opposing voltage to the voltage on the DC network. The opposing voltage forms across the module or a plurality of series-connected modules when coordinated together, and is capable of driving the fault current to a defined value. The circuit breaker apparatus must be designed to contain enough modules connected in series to have a sufficient collective voltage margin to cope with the nominal voltage rating of the DC network in order to drive the fault current to zero. The inclusion of the primary energy storage device in the second conduction path of the module therefore allows the fault current to be suppressed in a controlled manner.

If the current is driven to zero, the apparatus behaves as a circuit breaker. A second conventional AC circuit breaker or disconnector connected in series with the apparatus may then be switched to an open state to complete the circuit breaking process by providing isolation for safety purposes. Otherwise, if the opposing voltage drives the current to a non-zero value, then the apparatus behaves as a current limiter. In this case, the conventional AC circuit breaker may either remain closed or may be omitted in the first place.

After the fault in the DC network has been cleared, the circuit breaker apparatus may revert to its normal operating mode by opening the second mechanical switching element and closing the first mechanical switching element, so as to enable the DC network to resume normal power transmission.

The configuration of the module in the circuit breaker apparatus therefore results in the module forming a self-contained unit that can selectively apply a voltage drop into the DC network.

In embodiments of the invention the circuit apparatus may comprise a plurality of such modules connected in series. In such embodiments the circuit breaker apparatus may be used to either break or limit current in a DC network. The number of modules provided can be varied to suit low-, medium- and high-voltage electrical applications but is usually rated such that use of all modules drives the current to zero in a given application. In addition, the use of a plurality of series-connected modules in the circuit breaker apparatus allows the overall DC network voltage rating to be sub-divided into individual voltage ratings for the plurality of series-connected modules, which may number in the hundreds. This allows the use of freely available medium-voltage mechanical switching elements, resulting in a practical and cost-efficient circuit breaker apparatus.

The use of the mechanical switching elements and commutation circuit in the or each module provides a smooth commutation of current from the first conduction path to the second conduction path. In addition, the use of mechanical switching elements allows fast operation that is required for reliable current interruption but with a low actuation force, since each mechanical switching element requires only a short travel distance of its contact elements to achieve a high voltage withstand. Furthermore the first mechanical switching element is able to quickly recover its full voltage blocking capability after the arc has been quenched, so as to reliably block current from flowing in the first conduction path when operating in the second mode of operation. The configuration of the or each module in the circuit breaker apparatus therefore results in a reliable apparatus that is able to rapidly respond to a fault occurring in the DC network.

Moreover the non-polarised configuration of the or each module results in a flexible circuit breaker apparatus that is able to break or limit current in the DC network, irrespective of the direction of current flow between the circuit breaker apparatus and the polarity of the voltage drop across the circuit breaker apparatus. Such a circuit breaker apparatus is desirable for use with a DC network in which the direction of load current typically bears no relation to the direction of fault current.

In order to limit current in the DC network, the circuit breaker apparatus may be operated such that only some of the modules provide an opposing voltage to drive the current to a non-zero value, while the remaining modules do not provide an opposing voltage.

The current-limiting operation may be achieved through use of an embodiment of the circuit breaker apparatus, in which the circuit breaker apparatus includes a plurality of series-connected modules, wherein the first and second mechanical switching elements of one or more modules when operating in the first mode of operation are switched to direct current flowing between the first and second terminals through the first conduction path and away from the second conduction path, whilst the first and second mechanical switching elements of the or each other module when operating in the second mode of operation are switched to direct current flowing between the first and second terminals through the second conduction path and away from the first conduction path. This allows the opposing voltage to be adjusted to drive the current to any non-zero value that is less than the original fault current level.

The circuit breaker apparatus preferably further includes an actuator to switch the first and second mechanical switching elements. Such an actuator may be, for example, a magnetic latching actuator, or a hydraulic actuator using de-ionised water or compressed air.

The use of a single actuator to control the switching of the first and second mechanical switching elements in the or each module simplifies the operation of the circuit breaker apparatus.

In embodiments of the invention, the commutation circuit may include: an energy storage device to discharge to establish the resonant current in the second mode of operation; and an inductor.

The energy storage device and inductor of the commutation circuit are rated such that the commutation circuit is able to establish a peak resonant current that exceeds the fault current passing through the circuit breaker apparatus.

In embodiments employing the use of the commutation circuit, the second conduction path may include the commutation circuit, and the energy storage device and inductor of the commutation circuit may be connected in series with the second mechanical switching element. This allows the closing of the second mechanical switching element to trigger the operation of the commutation circuit to establish the resonant current, thus simplifying the operation of the or each module.

In further embodiments employing the use of the commutation circuit, the primary energy storage device may define the energy storage device of the commutation circuit.

Integrating the primary energy storage device into the commutation circuit advantageously minimises the number of components in the or each module, which in turn reduces the overall cost, size and weight of the circuit breaker apparatus.

In such embodiments, the energy storage device of the commutation circuit may be charged, in use, to a predetermined voltage in the first mode of operation. This allows the energy storage device of the commutation circuit when operating in the second mode of operation to rapidly establish the required resonant current, so as to improve the response time of the circuit breaker apparatus to the occurrence of the fault in the DC network.

In embodiments of the invention, the or each module may include a resistive element and/or a surge arrestor to divert charging current from the first and second terminals away from the primary energy storage device to limit a maximum voltage across the primary energy storage device. This is achieved by the resistive element and/or surge arrestor absorbing and dissipating inductive energy from the DC network when the voltage across the primary energy storage device reaches a particular voltage.

The use of the resistive element and/or surge arrestor to divert the charging current away from the primary energy storage device not only keeps voltage stresses appearing across the components of the or each module to within safe levels, but also dampens any voltage over-swing that may result from the resonant nature of the commutation circuit.

Preferably the surge arrestor is a non-linear surge arrestor.

In embodiments employing the use of the resistive element, the resistive element may include at least one linear resistor and/or at least one non-linear resistor, e.g. a metal-oxide varistor.

In further embodiments employing the use of the resistive element, the or each module may further include an auxiliary switching element connected to the resistive element, the auxiliary switching element being operable to modify flow of current through or voltage drop across the resistive element.

The use of the auxiliary switching element allows the resistive element to be selectively switched into or out of circuit to modify the flow of current through or voltage drop across the resistive element so as to control absorption and dissipation of energy by the resistive element. When the resistive element consists of a plurality of resistive element parts, the auxiliary switching element and the plurality of resistive element parts may be arranged so that the auxiliary switching element is able to switch some of the resistive element parts, instead of the entire resistive element, out of circuit when modifying the flow of current through or the voltage drop across the resistive element, whilst the other resistive element parts remain in circuit.

The resistive element is preferably connected in parallel with the primary energy storage device.

In embodiments of the invention, the or each module may further include a snubber circuit to control a rate of change of voltage across the first mechanical switching element in the second mode of operation The snubber circuit may, for example, include a secondary energy storage device connected in series with a resistor.

The commutation of fault current from the first conduction path to the second conduction path may give rise to a rapid change in voltage across the contact elements of the first mechanical switching element. The snubber circuit acts to limit the rate of rise of voltage across the first switching element to prevent an arc restriking across the contact elements of the first switching element.

The snubber circuit may be arranged in the or each module to form different configurations in order to control a rate of change of voltage across the first mechanical switching element in the second mode of operation. In one such configuration, the snubber circuit may define a bridge between the first and second conduction paths, and may be connected in parallel with the commutation circuit. In another such configuration, the snubber circuit may be connected in parallel with the first mechanical switching element.

Preferably each mechanical switching element includes retractably engaged contact elements located within a dielectric medium.

The choice of dielectric medium affects the voltage withstand capability of each mechanical switching element. The dielectric medium may be a high-performance dielectric medium, which may be, but not limited to oil, vacuum or sulphur hexafluoride. Use of high-performance dielectric media enables a small separation between the contact elements of each mechanical switching element to result in a high isolation voltage. This in turn facilitates rapid switching of each mechanical switching element, since the contact elements are only required to travel a short distance to achieve the required separation. A short separation between the contact elements also reduces the actuation energy required to operate the mechanical switching element, thus reducing the overall size, cost and weight of the circuit breaker apparatus.

In embodiments of the invention, the circuit breaker apparatus may further include a charging circuit, wherein the charging circuit includes a shunt and a converter, the shunt diverting part of the current flowing, in use, between the first and second terminals into the converter to harvest power from the diverted current so as to charge the primary energy storage device. This allows the energy storage device of the commutation circuit to the predetermined voltage in the first mode of operation.

In further embodiments of the invention, the circuit breaker apparatus may include a plurality of series-connected modules, and, in use, the first and second mechanical switching elements of the plurality of series-connected modules may be sequentially switched to momentarily direct a current through the second conduction path of each module at different intervals for different modules.

The switching of the first and second mechanical switching elements of the plurality of series-connected modules in this manner allows each primary energy storage device to charge at regular intervals. The voltage drop provided by each module during the sequential switching process is very small when compared to the overall DC voltage of the DC network. Power for local electronics associated with each module may then be sourced directly from the corresponding primary energy storage device.

A preferred embodiment of the invention will now be described, by way of a non-limiting example, with reference to the accompanying drawings in which:

Figure 1 shows, in schematic form, a module forming part of a circuit breaker apparatus according to an embodiment of the invention;
Figure 2 shows, in schematic form, the circuit breaker apparatus in connection with a DC network;
Figure 3a shows a magnetic latching actuator that is operable to switch the first and second mechanical switching elements of the module of Figure 1;
Figure 3b illustrates the operation of the magnetic latching actuator of Figure 3a to switch the first and second mechanical switching elements of the module of Figure 1;
Figures 4a to 4f illustrate the operation of the module of Figure 1 to carry out a current-breaking procedure
Figures 5a and 5b illustrate the changes in current in the first and second conduction paths in a simulated operation of the module of Figure 1 to carry out the current-breaking procedure illustrated in Figures 4a to 4f;
Figures 6a and 6b illustrate the change in voltage across the primary energy storage device in a simulated operation of the module of Figure 1 to carry out the current-breaking procedure illustrated in Figures 4a to 4f;
Figure 7 illustrate the change in voltage across a DC load in a simulated operation of the module of Figure 1 to carry out the current-breaking procedure illustrated in Figures 4a to 4f;
Figure 8a illustrates the commutation of current from the first conduction path to the second conduction path in a simulated operation of the module of Figure 1 to carry out the current-breaking procedure illustrated in Figures 4a to 4f;
Figure 8b illustrates the commutation of current from the first conduction path to the second conduction path in a simulated operation of the module of Figure 1 to carry out a subsequent current-breaking procedure following completion of the current-breaking procedure illustrated in Figures 4a to 4f;
Figures 9a and 9b illustrate the changes in current in the first and second conduction paths in a simulated operation of the module of Figure 1 to carry out a subsequent current-breaking procedure following completion of the current-breaking procedure illustrated in Figures 4a to 4f; and
Figure 10 illustrates the change in voltage across the primary energy storage device in a simulated operation of the module of Figure 1 to a subsequent current-breaking procedure following completion of the current-breaking procedure illustrated in Figures 4a to 4f.

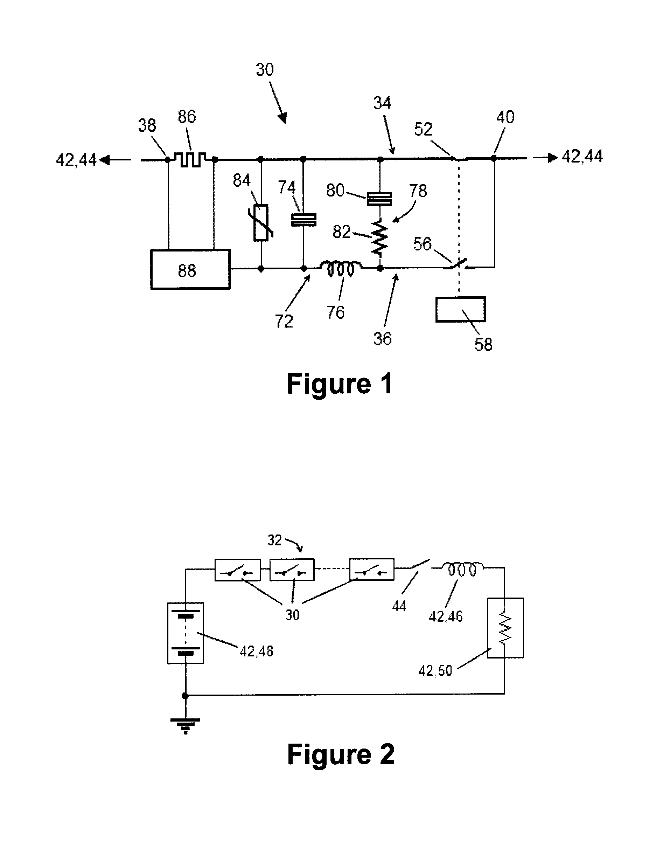

A module 30 forming part of a circuit breaker apparatus 32 according to an embodiment of the invention is shown in Figure 1.

The circuit breaker apparatus 32 comprises a plurality of series-connected modules 30. Each module 30 includes: first and second conduction paths 34,36; and first and second terminals 38,40. Each conduction path extends between the first and second terminals 38,40.

In use, the first and second terminals 38,40 of each module 30 are connected in series with a DC network 42 and an AC circuit breaker 44. The DC network 42 includes a lumped line impedance 46, a DC voltage source 48 and a DC load 50, as shown in Figure 2.

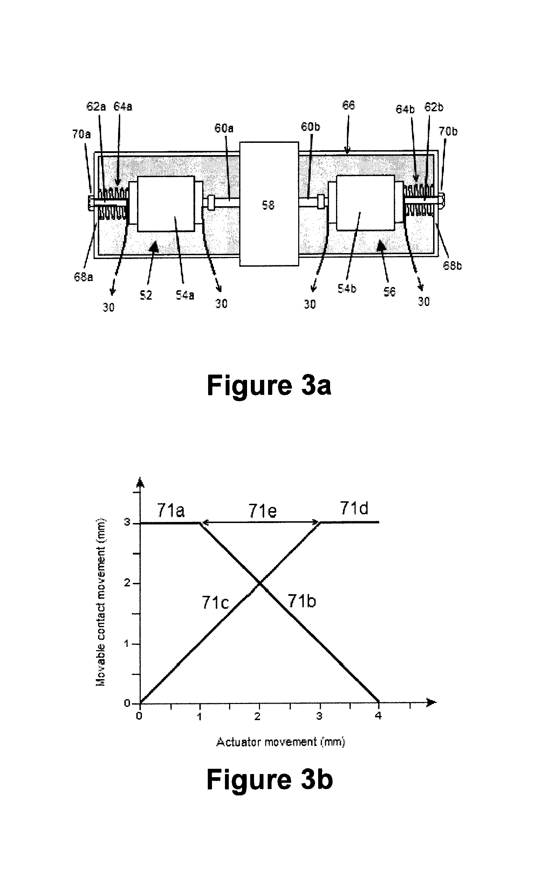

The first conduction path 34 includes a first mechanical switching element 52 in the form of a first vacuum interrupter with retractably engaged contact elements (not shown) located inside a first vacuum enclosure 54a, while the second conduction path 36 includes a second mechanical switching element 56 in the form of a second vacuum interrupter with retractably engaged contact elements (not shown) located inside a second vacuum enclosure 54b, as shown in Figure 3a.

In each mechanical switching element 52,56, one of the contact elements is movable relative to the vacuum enclosure 54a,54b to define a moveable contact element, while the other of the contact elements is fixed relative to the vacuum enclosure 54a,54b to define a fixed contact element.

The first mechanical switching element 52 is rated to be able to carry a load current $I_N$ flowing in the DC network 42 during normal power transmission.

Each mechanical switching element 52,56 is preferably rated to have a voltage withstand capability of 10 kV/mm. Thus, each mechanical switching element 52,56 is able to withstand voltages that exceed 20 kV when the contact elements of each mechanical switching element 52,56 are separated by a gap in the range of 2 to 3 mm.

Each module 30 further includes a magnetic latching actuator 58, as shown in Figure 3a, that controls the switching of the first and second mechanical switching elements 52,56 to define a bistable mechanism that is in either a first configuration or a second configuration. In the first configuration, the first mechanical switching element 52 is closed whilst the second mechanical switching element 56 is open. In the second configuration, the first mechanical switching element 52 is open whilst the second mechanical switching element 56 is closed.

Each module 30 further includes first and second insulating push rods 60a,60b. The movable contact element of the first mechanical switching element 52 is supported by the first insulating push rod 60a, while the fixed contact element of the first mechanical switching element 52 is supported by a first bolt 62a and a first pre-compressed spring 64a. Similarly, the movable contact element of the second mechanical switching element 56 is supported by the second insulating push rod 60b, while the fixed contact element of the second mechanical switching element 56 is supported by a second bolt 62b and a second pre-compressed spring 64b.

The first and second mechanical switching elements 52,56, the magnetic latching actuator 58, the insulating push rods 60a,60b and the pre-compressed springs 64a,64b are housed within a rigid, insulated housing 66, as shown in Figure 3a. Each pre-compressed spring 64a,64b is arranged between the corresponding vacuum enclosure 54a,54b and a wall 68a,68b of the housing 66. This allows each pre-compressed spring 64a,64b to apply a force to push the fixed contact element towards the movable contact element. When the movable and fixed contact elements are in contact, the applied force acting between the contact elements must be sufficiently high to achieve the required current rating of the corresponding mechanical switching element 52,56.

Each bolt 62a,62b is partially housed within the housing 66 and partially extends through a wall 68a,68b of the housing 66 so that its head 70a,70b is located outside the housing 66. This allows each bolt 62,62b to limit the maximum movement range of the corresponding pre-compressed spring 64,64b when its head 70a,70b is restrained by the corresponding wall 68a,68b of the housing 66.

The first and second insulating push rods 60a, 60b are coupled to the magnetic latching actuator 58 such that, in use, the magnetic latching actuator 58 moves the first and second insulating push rods 60a,60b to simultaneously push one of the movable contact elements towards its corresponding fixed contact element and pull the other of the movable contact elements away from its corresponding fixed contact element.

Figure 3b illustrates the operation of the actuator to switch the bistable mechanism from its first configuration to its second configuration.

To switch the bistable mechanism from its first configuration to its second configuration, the magnetic latching actuator 58 moves the first insulating push rod 60a to trigger separation of the contact elements of the first mechanical switching element 52. This is followed by relaxation of the first pre-compressed spring 64a, which keeps the moveable contact in contact 71 a with the fixed contact element until the movement of the first pre-compressed spring 64a is restrained by the first bolt 62a. At this instant, subsequent movement of the first insulating push rod 60a results in separation 71 b of the contact elements of the first mechanical switching element 52. At the same time, the magnetic latching actuator 58 moves, the second insulating push rod 60b to reduce 71 c the gap between the contact elements of the second mechanical switching element 56. When the contact elements of the second mechanical switching element 56 are closed, the movable element stops moving 71 d and the second pre-compressed spring 64b applies a force to keep the contact elements in contact. The magnetic latching actuator 58 and insulating push rods 60a,60b are arranged so that the contact elements of the first mechanical switching element 52 are separated 71 e before the contact elements of the second mechanical switching element 56 are closed 71 d.

The operation of the bistable mechanism as set out above applies mutatis mutandis to the switching of the bistable mechanism from its second configuration to its first configuration.

The configuration of the bistable mechanism therefore allows the first and second mechanical switching elements 52,56 to define a break-before-make switching arrangement.

The operation of the magnetic latching actuator 58 preferably uses permanent magnets to maintain the latching of the bistable mechanism in either the first or second configuration, so that power is only required to operate the magnetic latching actuator 58 in order to move the insulating push rods 60a,60b.

It is envisaged that, in other embodiments of the invention, the magnetic latching actuator 58 may be replaced by another type of actuator that is able to couple the first and second mechanical switching elements 52,56 to define a break-before-make switching arrangement. Such an actuator may be, for example, a hydraulic actuator using de-ionised water or compressed air.

It is further envisaged that, in other embodiments of the invention, the first and second mechanical switching elements 52,56 may be separately switched, instead of being switched using a single actuator, to define the break-before-make switching arrangement.

The second conduction path 36 further includes a commutation circuit 72, which includes a primary energy storage device 74 in the form of a capacitor, and an inductor 76. The primary energy storage device 74 and the inductor 76 is connected in series with the second mechanical switching element 56.

The series-connection of the primary energy storage device 74 and the inductor 76 means that, in other embodiments, they may be connected in reverse order within the second conduction path 36.

It is envisaged that, in other embodiments of the invention, the primary energy storage device 74 does not form part of the commutation circuit 72, and the commutation circuit 72 may further include an additional energy storage device that is distinct from the primary energy storage device 74.

Each module 30 further includes a snubber circuit 78, which includes a secondary energy storage device 80 in the form of a capacitor that is connected in series with a resistor 82. The snubber circuit 78 bridges the first and second conduction paths 34,36 and is connected in parallel with the commutation circuit 72.

The series-connection of the secondary energy storage device 80 and the resistor 82 means that, in other embodiments, they may be connected in reverse order within the snubber circuit 78.

It is envisaged that, in other embodiments of the invention, the snubber circuit 78 may be connected in parallel with the first mechanical switching element 52.

Each module 30 further includes a non-linear surge arrestor 84 that is connected in parallel with the primary energy storage device 74. The purpose of the surge arrestor 84 is to divert charging current away from the primary energy storage device 74 in order to limit a maximum voltage across the primary energy storage device 74. This not only keeps voltage stresses appearing across the components of each module 30 to within safe levels, but also dampens any voltage over-swing that may result from the resonant nature of the commutation circuit 72.

It is envisaged that, in other embodiments of the invention, the surge arrestor may be replaced by or used in combination with a resistive element that includes at least one non-linear resistor and/or at least one linear resistor.

It is further envisaged that, in further embodiments employing the use of the resistive element, each module may further include an auxiliary switching element connected to the resistive element, the auxiliary switching element being operable to modify flow of current through or voltage drop across the resistive element. The use of the auxiliary switching element allows the resistive element to be selectively switched into or out of circuit to modify the flow of current through or voltage drop across the resistive element so as to control absorption and dissipation of energy by the resistive element.

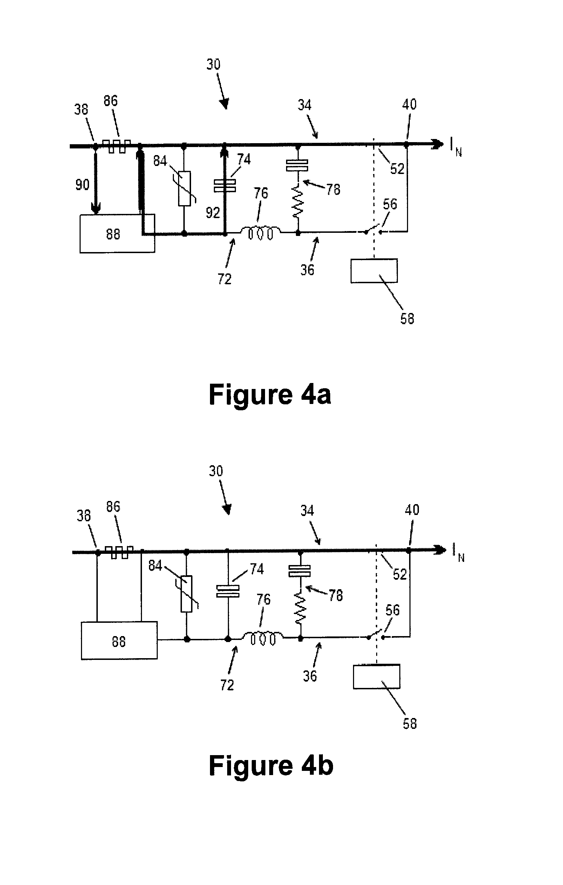

Each module 30 further includes a charging circuit, which includes a shunt 86 and a converter 88. The shunt 86 is connected in series between the first and second terminals 38,40. In use, the flow of current between the first and second terminals 38,40 introduces a voltage drop across the shunt 86, which allows part of the current to be diverted 90 to a converter 88. In turn, the converter 88 harvests power from the diverted current 90 to charge 92 the primary energy storage device 74, as shown in Figure 4a.

Each module 30 further includes local electronics (not shown) that are used to operate the magnetic latching actuator 58 and enable communication between each module 30 and ground control (not shown).

It is envisaged that, in embodiments of the invention, the local electronics may be powered by:

- harvesting power directly from the DC voltage source 48;
- sequentially switching the first and second mechanical switching elements 52,56 of different modules 30 at different intervals to momentarily direct the load current $I_N$ through the second conduction path 36. This allows each primary energy storage device 74 to charge to the surge arrestor voltage at regular intervals. The voltage drop provided by each module 30 during the sequential switching process is very small when compared to the overall DC voltage of the DC network 42. The power for the local electronics may then be sourced directly from each primary energy storage device 74;

- using a local reservoir capacitor and an auxiliary power supply to trickle-charge the reservoir capacitor to the required level over a period of, for example, 100ms. Since the delay between consecutive current-breaking procedures may be in the order of 3 ms, the pre-charged reservoir capacitor may not be charged to the required level after the first current-breaking procedure is completed. Two pre-charged reservoir capacitors may therefore be used to provide power to the local electronics for each current-breaking procedure. Rapid operation of the magnetic latching actuator 58 may be achieved by operating the actuator 58 at high voltage and configuring the actuator coil to have a minimum number of turns. To convert the energy from the reservoir capacitor into current to operate the actuator 58, the reservoir capacitor may have a capacitance value that resonates with the actuator coil inductance, and a diode may be used to prevent the voltage of the reservoir capacitor going through zero in order to provide a sustained current for driving the actuator 58; or

- an optically driven power supply.

It will be appreciated that the use of a ground-based power supply to power the local electronics may be precluded if the operating voltage of the circuit breaker apparatus is too high for the ground-based power supply.

Operation of each module 30 of the circuit breaker apparatus 32 in Figure 1 to break current in the DC network 42 is described as follows, with reference to Figures 4a to 4f.

During normal power transmission in the DC network 42, the magnetic latching actuator 58 switches the first and second mechanical switching elements 52,56 to the first configuration of the bistable mechanism, as shown in Figure 4b. This allows a load current $I_N$ to flow from the DC voltage source 48 to the DC load 50 through the first conduction path 34 of each module 30 and the series-connected AC circuit breaker 44. At this stage the load current $I_N$ does not flow through the second conduction path 36 of each module 30. Meanwhile the primary energy storage device 74 is charged to a predetermined voltage through use of the charging circuit, as shown in Figure 4a.

A fault or other abnormal operating condition in the DC network 42 may lead to high fault current $I_F$ flowing through the DC network 42.

In response to an event of high fault current in the DC network 42, the magnetic latching actuator 58 switches the first and second mechanical switching elements 52,56 to the second configuration of the bistable mechanism.

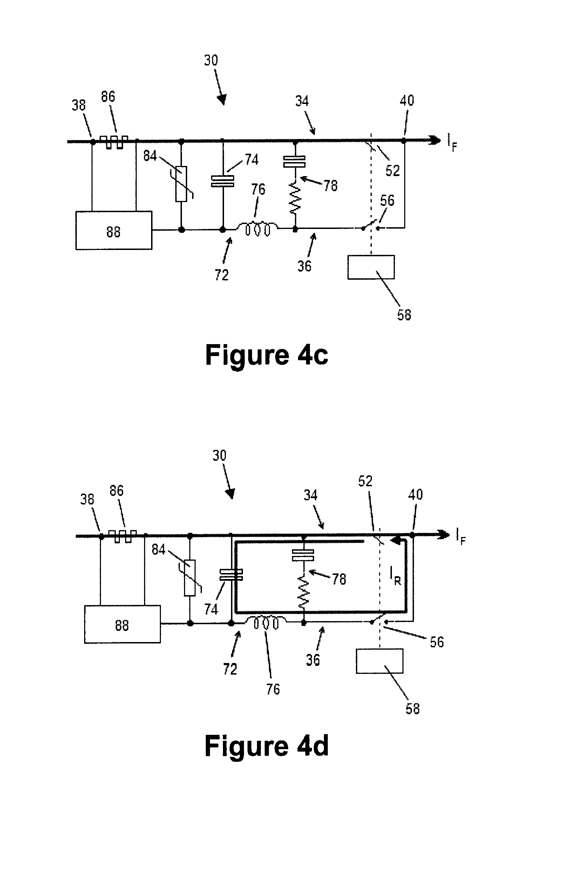

When the first mechanical switching element 52 is opened, an arc current forms between the contact elements of the first mechanical switching element 52. At this stage the fault current $I_F$ continues to flow in the first conduction path 34 due to the presence of the arc current, as shown in Figure 4c.

As mentioned above, the break-before-make switching arrangement of the first and second mechanical switching elements 52,56 results in the first mechanical switching element 52 being opened before the second mechanical switching element 56 is closed.

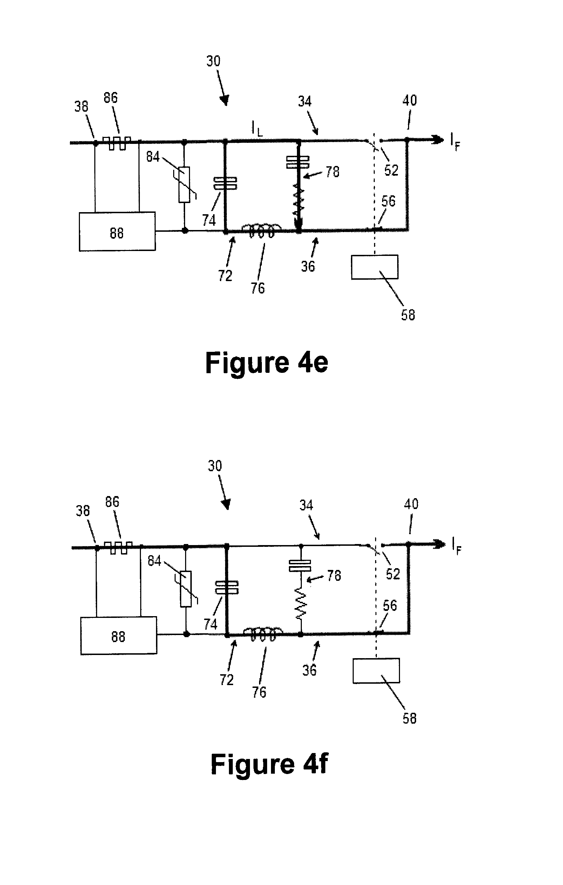

When the second mechanical switching element 56 is closed, the pre-charged primary energy storage device 74 begins to discharge. The resonance between the primary energy storage device 74 and the inductor 76 allows the commutation circuit 72 to establish a resonant current $I_R$ that flows in a circuit defined by the commutation circuit 72, the first mechanical switching element 52 and the second mechanical switching element 56, as shown in Figure 4d. The resonant current $I_R$ flows in the opposite direction to the arc current, and rises until it is equal in magnitude to the arc current. At this instant the resonant current $I_R$ and arc current cancel out, resulting in quenching of the arc current across the first mechanical switching element 52. This results in commutation of the fault current $I_F$ from the first conduction path 34 to the second conduction path 36, as shown in Figure 4e.

Preferably, when the resonant current $I_R$ and arc current cancel out, the rate of change of current in the first mechanical switching element 52 is sufficiently slow, e.g. less than 100 A per $\mu$s, to allow condensation of metal ions present between the contact elements in order to minimise the amount of available metal ions and thereby reduce the risk of a re-strike of the arc across the contact elements.

When the resonant current $I_R$ and arc current cancel out, a voltage appears across the inductor 76. This results in the flow of residual current $I_L$ in the inductor 76. The snubber circuit 78 provides a current path for the residual current $I_L$ in the inductor 76, as shown in Figure 4e, to limit the rate of rise of voltage across the first mechanical switching element 52, preferably less than 20kV per $\mu$s, in order to preventing a re-strike of the arc across its contact elements.

The snubber circuit 78 also provides a current path for any capacitive current flowing through the primary energy storage device 74 that arises from the primary energy storage device 74 experiencing a high rate of change of voltage when the resonant current $I_R$ and arc current cancel out, in order to preventing a re-strike of the arc across its contact elements.

Meanwhile the inductor 76 of the commutation circuit 72 limits the peak value of the resonant current $I_R$ to minimise the stress on the components of the module 30.

The flow of high fault current $I_F$ in the second conduction path 36 will result in rapid charging of the primary energy storage device 74, as shown in Figure 4f. This allows the primary energy storage device 74 of each module 30 to provide an opposing voltage to the voltage on the DC network 42. Each primary energy storage device 74 will continue to charge until the corresponding surge arrestor 84 conducts, or until the total opposing voltage provided by all the modules 30 is equal to the voltage on the DC network 42. When each surge arrestor 84 conducts, it will absorb and dissipate inductive energy from the DC network 42.

If the DC network 42 is connected to a highly inductive network, the total voltage capability of the surge arrestors 84 in the plurality of series-connected modules 30 must be greater than the normal operating voltage of the DC network 42, in order for the fault current $I_F$ to reduce to zero.

When the sum of the opposing voltages provided by the plurality of series-connected modules 30 is equal to the voltage of the DC voltage source 48, the fault current $I_F$ will cease to flow in the DC network 42. This allows the series-connected AC circuit breaker 44 to be opened to complete the current breaking procedure, thus allowing the fault in the DC network 42 to be cleared.

After the fault in the DC network 42 has been cleared, the circuit breaker apparatus 32 may revert to its normal operating mode by operating the actuator to switch the first and second mechanical switching elements 52,56 to the first configuration of the bistable mechanism, so as to enable the DC network 42 to resume normal power transmission.

To operate the circuit breaker apparatus 32 in a current-limiting mode, some of the series-connected modules 30 are operated so that their first and second mechanical switching elements 52,56 are switched to define the second configuration of the bistable mechanism to allow their primary energy storage devices 74 to provide an opposing voltage, which opposes part of the current flowing through the DC network 42 and thereby drive the current to a lower non-zero value or prevent a further rise of current. Meanwhile the remaining modules 30 are operated so that their first and second mechanical switching elements 52,56 are switched to define the first configuration of the bistable mechanism, and so their primary energy storage devices 74 do not contribute any opposing voltage to drive the fault current $I_F$ to the lower non-zero value.

The circuit breaker apparatus 32 is therefore capable of breaking and/or limiting current in the DC network 42.

The use of the mechanical switching elements 52,56 and commutation circuit 72 in each module 30 provides a smooth commutation of current from the first conduction path 34 to the second conduction path 36. In addition, the use of mechanical switching elements 52,56 allows fast operation that is required for reliable current interruption but with a low actuation force, since each mechanical switching element 52,56 requires only a short travel distance of its contact elements to achieve a high voltage withstand. Furthermore the first mechanical switching element 52 is able to quickly recover its full voltage blocking capability after the arc has been quenched, so as to reliably block current from flowing in the first conduction path 34 during the flow of fault current $I_F$ in the DC network 42. The configuration of each module 30 in the circuit breaker apparatus 32 therefore results in a reliable apparatus 32 that is able to rapidly respond to a fault occurring in the DC network 42.

It will be appreciated that the non-polarised configuration of each module 30 results in a flexible circuit breaker apparatus 32 that is able to break or limit current in the DC network 42, irrespective of the direction of current flow between the circuit breaker apparatus 32 and the polarity of the voltage drop across the circuit breaker apparatus 32. Such a circuit breaker apparatus 32 is desirable for use with a DC network 42 in which the direction of load current $I_N$ typically bears no relation to the direction of fault current $I_F$.

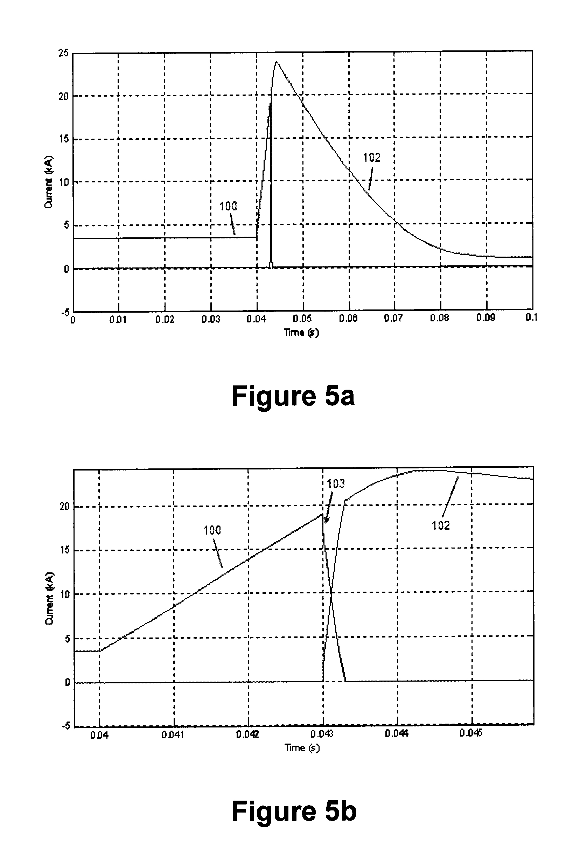

A model of the operation of the circuit breaker apparatus 32 to carry out the current-breaking procedure illustrated in Figures 4a to 4f was simulated using MATLAB/Simulink, and the results of the simulation is shown in Figures 5a, 5b, 6a, 6b and 7.

In the model, the DC network 42 has a DC voltage of 500kV and a load current of 3.5kA, and the plurality of series-connected modules 30 was simulated as a combined module 30 having a single primary energy storage device 74 with a capacitance of 35μF. In addition, in the combined module 30, the secondary energy storage device 80 of the snubber circuit 78 has a capacitance of 3.5μF and the resistor 82 of the snubber circuit 78 has a resistance of 10Ω.

A trip current threshold for the circuit breaker apparatus 32 was arbitrarily set to 20kA for the purposes of the model. The value of the trip current threshold must be sufficiently high to provide enough time to detect a fast-rising fault current $I_F$ and operate the circuit breaker apparatus 32, and sufficiently low to prevent damage to the DC network 42 by the time the circuit breaker apparatus 32 has been operated.

In the mode, a fault was set to occur on the DC network 42 at t = 40 ms. The occurrence of the fault results in a fault current $I_F$ that rises at a rate of nominally 6 kA per ms, which is limited by the impedance of the DC network 42. If the fault current $I_F$ is to be interrupted before it reaches 20kA and the primary energy storage device 74 of the combined module 30 is pre-charged to 200kV, the required inductor value to establish a resonant current that exceeds the arc current is given by Equation 1.

$$\frac{1}{2} \cdot C \cdot V^2 = \frac{1}{2} \cdot L \cdot I_F^2 \cdots\cdots (1)$$

Where C is the capacitance of the pre-charged primary energy storage device 74;

V is the voltage across the pre-charged primary energy storage device 74;

L is the inductance of the inductor 76;

$I_F$ is the fault current to be interrupted.

If the operation of the circuit breaker apparatus 32 is triggered by the fault current $I_F$ crossing the trip current threshold of 20 kA, the fault current $I_F$ can rapidly rise in the time taken to commutate the fault current from the first conduction path 34 to the second conduction path 36. Thus, Equation 1 may be rewritten to take into account the rise in fault current $I_F$. This results in Equation 2 as follows, which is used to determine the required value of the inductor 76 of the commutation circuit 72.

$$L = C \cdot \left( \frac{V}{I + dI / dt \cdot \Delta T} \right)^2 \cdots \cdots (2)$$

Where dI/dt is the rate of rise of fault current;
$\Delta T$ is the time taken to commutate the fault current $I_F$ from the first conduction path 34 to the second conduction path 36.

It can be seen from Equations 1 and 2 that the required value for the inductor 76 calculated using Equation 2 will be smaller than the value calculated using Equation 1.

Figures 5a and 5b illustrate the changes in current 100,102 in the first and second conduction paths 34,36 in a simulated operation of the module 30 of Figure 1 to carry out the current-breaking procedure illustrated in Figures 4a to 4f.

At t = 40 ms, the occurrence of the fault in the DC network 42 gives rise to the fault current $I_F$ in the first conduction path 34 that rises at a rate of 6 kA per ms. During the rise in fault current $I_F$, the actuator 58 opens the first mechanical switching element 52. This results in an arc current across the contact elements of the first mechanical switching element 52 that maintains the flow of fault current $I_F$ in the first conduction path 34.

At t = 43 ms, the actuator 58 closes the second mechanical switching element 56 to allow the commutation circuit 72 to establish the resonant current $I_R$ that opposes the arc current and rises with time. Meanwhile the snubber circuit 78 causes a rapid change in current flowing through the first conduction path 34, which is depicted by a vertical edge 103 in Figure 5b.

When the resonant current $I_R$ is equal in magnitude to the arc current, the resonant current $I_R$ and the arc current cancel out, resulting in quenching of the arc current across the first mechanical switching element 52. At this stage the fault current $I_F$ is commutated from the first conduction path 34 to the second conduction path 36. Once the arc has been quenched, it takes time for the energy in the inductor 76 to settle, resulting in a delay before the peak fault current $I_F$ is reached at 44.5ms.

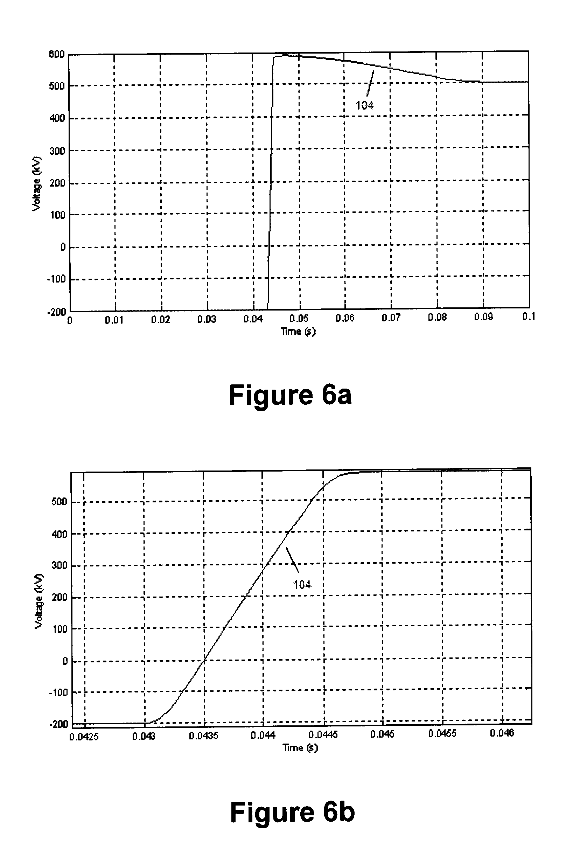

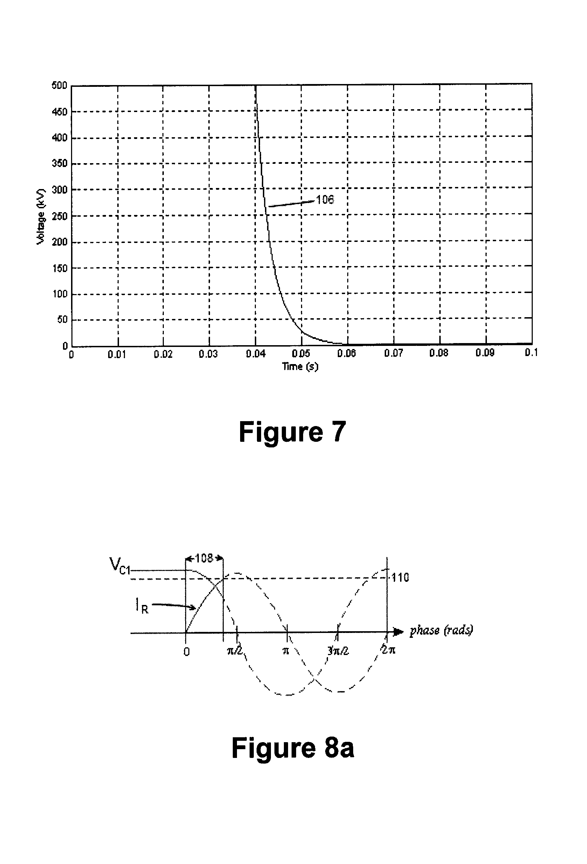

The flow of fault current $I_F$ in the second conduction path 36 charges the primary energy storage device 74 of the combined module 30. The voltage 104 across the primary energy storage device 74 starts to stabilise at t = 44.5 ms and eventually forms a steady-state opposing voltage of 500 kV, as shown in Figures 6a and 6b. The formation of the opposing voltage causes the fault current $I_F$ to cease flowing and thereby results in the collapse of the voltage 106 across the DC load to zero, as shown in Figure 7.

The operation of the circuit breaker apparatus 32 to carry out a current-breaking procedure therefore results in the primary energy storage devices 74 of the plurality of series-connected modules 30 being charged to provide an opposing voltage that cancels out the DC voltage on the DC network 42. The voltage across the primary energy storage device 74 after the current-breaking procedure is opposite in polarity to the voltage across the primary energy storage device 74 prior to the current-breaking procedure.

In practice, the circuit breaker apparatus 32 may be required to revert to its normal operating mode within a predetermined period of time after the initial current-breaking procedure.

Switching the circuit breaker apparatus 32 to its normal operating mode results in current flow through the first conduction path 34. The absence of current in the second conduction path 36 before switching the first and second mechanical switching elements 52,56 to define the first configuration of the bistable mechanism means that an arc current does not form across the second mechanical switching element 56. Since the actuator controls the switching of the first and second mechanical switching elements 52,56 as a break-before-make switching arrangement, the lack of an arc current across the second mechanical switching element 56 means that there is no conduction overlap between the first and second mechanical switching elements 52,56. This prevents the commutation circuit 72 from establishing a resonant current that is able to charge the primary energy storage device 74, so that it reverts to its voltage prior to the first current-breaking procedure.

If the fault on the DC network 42 is still present when the circuit breaker apparatus 32 is switched to its normal operating mode, the resultant rise in fault current $I_F$ requires the circuit breaker apparatus 32 to carry out a subsequent current-breaking procedure.

In the initial current-breaking procedure, since the primary energy storage device 74 is charged to a voltage $V_{C1}$ with the polarity needed to establish the required resonant current, it only takes approximately a quarter of a resonant sinusoidal cycle 108 for the resonant current $I_R$ to reach the level 110 required to cancel out the arc current across the first mechanical switching element 52, as shown in Figure 8a.

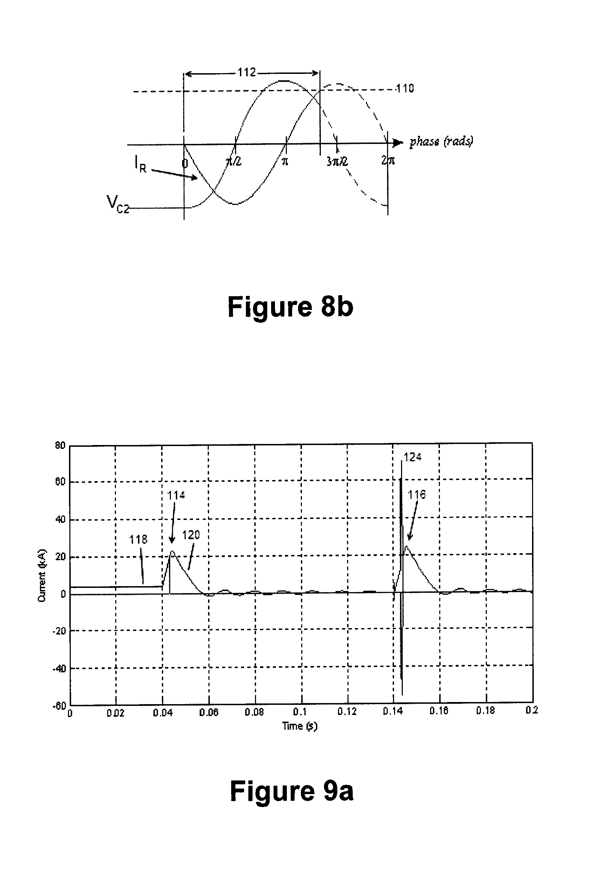

In the subsequent current-breaking procedure, since the primary energy storage device 74 is now charged to a voltage $V_{C2}$ with a different polarity to its voltage prior to the initial current-breaking procedure, it takes approximately half to three-quarters of a resonant sinusoidal current cycle 112 for the resonant current $I_R$ to reach the level 110 required to cancel out the arc current across the first mechanical switching element 52, as shown in Figures 8a and 8b. This is because, to carry out the subsequent current carrying procedure, it takes time to charge the primary energy storage device 74 to the polarity needed to establish the required resonant current $I_R$. The delay in commutation may result in the fault current $I_F$ rising to a point where it exceeds the peak value of the resonant current $I_R$. Thus, when determining the required inductor value using Equation 2, it is necessary to take into account the delay in commutation and the resulting rise in fault current $I_F$.

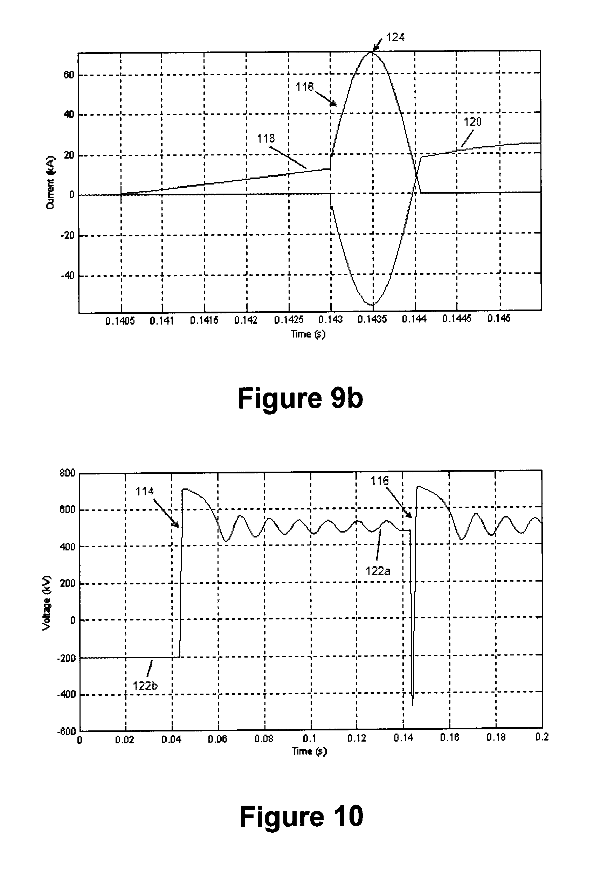

A model of the operation of the circuit breaker apparatus 32 to carry out the initial and subsequent current-breaking procedure 114,116 was simulated using MATLAB/Simulink, and the results of the simulation is shown in Figures 9a, 9b and 10. This model shares the same parameters as the earlier model with respect to the combined module 30 and the DC network 42.

Figures 9a and 9b illustrate the changes in current 118,120 in the first and second conduction paths in a simulated operation of the module of Figure 1 to carry out a subsequent current-breaking procedure following completion of the current-breaking procedure illustrated in Figures 4a to 4f.

The fault occurs at t = 40 ms, and the circuit breaker apparatus 32 is operated to carry out the initial current-breaking procedure 114. The circuit breaker apparatus 32 reverts to its normal operating mode at t = 140 ms, but the presence of the fault requires the subsequent current-breaking procedure 116 to be carried out. An initial current impulse is observed at t = 140.5 ms due to the presence of the snubber circuit 78 in the combined module 30.

As mentioned above, the primary energy storage device 74 being charged to the opposite polarity prior to the subsequent current-breaking procedure 116 means that the time taken for the commutation of the fault current $I_F$ from the first conduction path 34 to the second conduction path 36 is more than 1.0 ms, i.e. approximately half of the resonant sinusoidal cycle.

In Figure 10, the voltage 122a across the primary energy storage device 74 prior to the subsequent current-breaking procedure 116 is at a comparable magnitude to the voltage rating of the DC voltage source 48, and is higher than the voltage 122b across the primary energy storage device 74 prior to the initial current-breaking procedure 114. This results in a higher peak resonant current 124 during the subsequent current-breaking procedure 116 than during the initial current-breaking procedure.

## Claims

1. A circuit breaker apparatus comprising a module, the module including: first and second conduction paths; and first and second terminals for connection to an electrical network, each conduction path extending between the first and second terminals;

the first conduction path including a first mechanical switching element to selectively close to allow current to flow between the first and second terminals through the first conduction path in a first mode of operation, or open to block current from flowing between the first and second terminals through the first conduction path in a second mode of operation;
the second conduction path including a second mechanical switching element to selectively open to block current from flowing between the first and second terminals through the second conduction path in the first mode of operation, or close to allow current to flow between the first and second terminals through the second conduction path in the second mode of operation, wherein the first and second mechanical switching elements define a break-before-make switching arrangement;
the second conduction path further including a primary energy storage device to oppose current flowing between the first and second terminals through the second conduction path in the second mode of operation; and
the module further including a commutation circuit to establish a resonant current in the first mechanical switching element to quench an arc current appearing across the first mechanical switching element in the second mode of operation.

2. A circuit breaker apparatus according to Claim 1 including a plurality of series-connected modules, wherein the first and second mechanical switching elements of one or more modules when operating in the first mode of operation are switched to direct current flowing between the first and second terminals through the first conduction path and away from the second conduction path, whilst the first and second mechanical switching elements of the or each other module when operating in the second mode of operation are switched to direct current flowing between the first and second terminals through the second conduction path and away from the first conduction path.

3. A circuit breaker apparatus according to any preceding claim further including an actuator to switch the first and second mechanical switching elements.

4. A circuit breaker apparatus according to any preceding claim wherein the commutation circuit includes: an energy storage device to discharge to establish the resonant current in the second mode of operation; and an inductor.

5. A circuit breaker apparatus according to Claim 4 wherein the second conduction path includes the commutation circuit, and the energy storage device and inductor of the commutation circuit are connected in series with the second mechanical switching element.

6. A circuit breaker apparatus according to Claim 4 or Claim 5 wherein the primary energy storage device defines the energy storage device of the commutation circuit.

7. A circuit breaker apparatus according to any of Claims 4 to 6 wherein the energy storage device of the commutation circuit is charged, in use, to a predetermined voltage in the first mode of operation.

8. A circuit breaker apparatus according to any preceding claim wherein the or each module includes a resistive element and/or a surge arrestor to divert charging current from the first and second terminals away from the primary energy storage device to limit a maximum voltage across the primary energy storage device.

9. A circuit breaker apparatus according to Claim 8 wherein the resistive element includes at least one linear resistor and/or at least one non-linear resistor.

10. A circuit breaker apparatus according to Claim 8 or Claim 9 wherein the or each module further includes an auxiliary switching element connected to the resistive element, the auxiliary switching element being operable to modify flow of current through or voltage drop across the resistive element.

11. A circuit breaker apparatus according to any of Claims 8 to 10 wherein the resistive element is connected in parallel with the primary energy storage device.

12. A circuit breaker apparatus according to any preceding claim wherein the or each module further includes a snubber circuit to control a rate of change of voltage across the first mechanical switching element in the second mode of operation.

13. A circuit breaker apparatus according to Claim 12 wherein the snubber circuit defines a bridge between the first and second conduction paths, and is connected in parallel with the commutation circuit.

14. A circuit breaker apparatus according to Claim 12 wherein the snubber circuit is connected in parallel with the first mechanical switching element.

15. A circuit breaker apparatus according to any preceding claim wherein each mechanical switching element includes retractably engaged contact elements located within a dielectric medium.

16. A circuit breaker apparatus according to any preceding claim further includes a charging circuit, wherein the charging circuit includes a shunt and a converter, the shunt diverting part of the current flowing, in use, between the first and second terminals into the converter to harvest power from the diverted current so as to charge the primary energy storage device.

17. A circuit breaker apparatus according to any preceding claim including a plurality of series-connected modules, wherein, in use, the first and second mechanical switching elements of the plurality of series-connected modules are sequentially switched to momentarily direct a current through the second conduction path of each module at different intervals for different modules.

Figure 1

Figure 2

# Figure 3a

# Figure 3b

**Figure 4a**

**Figure 4b**

**Figure 4c**

**Figure 4d**

# Figure 4e

# Figure 4f

## Figure 5a

## Figure 5b

## Figure 6a

## Figure 6b

# Figure 7

# Figure 8a

**Figure 8b**

**Figure 9a**

## Figure 9b

## Figure 10

Europäisches
Patentamt

European
Patent Office

Office européen
des brevets

# EUROPEAN SEARCH REPORT

Application Number

EP 12 27 5081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br><br>A | DE 43 04 863 A1 (HITACHI LTD [JP])<br>26 August 1993 (1993-08-26)<br>* column 2, line 35 - column 4, line 11;<br>figures 1-3 * | 1,4-6,8,<br>9,15<br>2,10-14,<br>17<br>3,7,16 | INV.<br>H01H33/59 |
| X<br><br>A | US 2 849 659 A (FRITZ KESSELRING)<br>26 August 1958 (1958-08-26)<br>* column 2, line 49 - column 3, line 21;<br>figures 2,7,9,16 *<br>* column 4, line 1 - column 6, line 19 *<br>* column 6, line 65 - column 8, line 49 *<br>* column 13, line 28 - line 58 * | 1,3-7,<br>15,16<br>2,8-14,<br>17 | |
| X<br><br><br><br><br><br><br><br><br><br>Y<br>A | GREENWOOD A N ET AL: "THEORY AND APPLICATION OF THE COMMUTATION PRINCIPLE FOR HVDC CIRCUIT BREAKERS",<br>IEEE TRANSACTIONS ON POWER APPARATUS AND SYSTEMS, IEEE INC. NEW YORK, US,<br>vol. PAS91, no. 4,<br>1 July 1972 (1972-07-01), pages 1570-1574,<br>XP002049258,<br>ISSN: 0018-9510<br>* the whole document * | 1,3-7<br><br><br><br><br><br><br><br><br><br>12-14<br>2,8-11,<br>15-17 | |
| Y,D<br><br><br>A | EP 0 867 998 A1 (ASEA BROWN BOVERI [SE]<br>ABB AB [SE])<br>30 September 1998 (1998-09-30)<br>* column 1, line 48 - column 7, line 9;<br>figures 1,3 * | 2,17<br><br><br>1 | |

TECHNICAL FIELDS
SEARCHED (IPC)

H01H
H02H

-/--

The present search report has been drawn up for all claims

| Place of search | Date of completion of the search | Examiner |
|---|---|---|
| Munich | 12 November 2012 | Ernst, Uwe |

EPO FORM 1503 03.82 (P04C01)

Europäisches
Patentamt

European
Patent Office

Office européen
des brevets

# EUROPEAN SEARCH REPORT

Application Number

EP 12 27 5081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BACHMANN B ET AL: "Development of a 500 kV air blast HVDC circuit breaker", IEEE TRANSACTIONS ON POWER APPARATUS AND SYSTEMS, IEEE INC. NEW YORK, US, vol. 9, no. PAS-104, 1 September 1985 (1985-09-01), pages 2460-2466, XP002076109, ISSN: 0018-9510 | 10,11 | |
| A | * the whole document * | 1,3-9, 12-17 | |
| | ----- | | |
| A | FR 2 013 736 A1 (GEN ELECTRIC) 10 April 1970 (1970-04-10) * the whole document * | 1-17 | |
| | ----- | | |
| A | FR 1 436 174 A (THOMSON HOUSTON COMP FRANCAISE) 22 April 1966 (1966-04-22) * figures 1,2 * | 1-17 | |
| | ----- | | |

TECHNICAL FIELDS
SEARCHED      (IPC)

The present search report has been drawn up for all claims

| Place of search | Date of completion of the search | Examiner |
|---|---|---|
| Munich | 12 November 2012 | Ernst, Uwe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

   .................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 27 5081

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2012

| Patent document cited in search report | | Publication date | Patent family member(s) | | Publication date |
|---|---|---|---|---|---|
| DE 4304863 | A1 | 26-08-1993 | DE | 4304863 A1 | 26-08-1993 |
| | | | JP | 3135338 B2 | 13-02-2001 |
| | | | JP | 5234471 A | 10-09-1993 |
| | | | US | 5452170 A | 19-09-1995 |
| US 2849659 | A | 26-08-1958 | CH | 312401 A | 31-12-1955 |
| | | | CH | 316926 A | 31-10-1956 |
| | | | CH | 318305 A | 31-12-1956 |
| | | | CH | 319739 A | 28-02-1957 |
| | | | CH | 320098 A | 15-03-1957 |
| | | | DE | 1029448 B | 08-05-1958 |
| | | | DE | 1059074 B | 12-11-2012 |
| | | | DE | 1091206 B | 12-11-2012 |
| | | | DE | 1148618 B | 16-05-1963 |
| | | | DE | 1151041 B | 04-07-1963 |
| | | | FR | 1097181 A | 30-06-1955 |
| | | | GB | 762603 A | 28-11-1956 |
| | | | US | 2849659 A | 26-08-1958 |
| EP 0867998 | A1 | 30-09-1998 | CA | 2218941 A1 | 24-09-1998 |
| | | | DE | 69837414 T2 | 20-12-2007 |
| | | | EP | 0867998 A1 | 30-09-1998 |
| | | | JP | 10313541 A | 24-11-1998 |
| | | | SE | 510597 C2 | 07-06-1999 |
| | | | SE | 9701065 A | 25-09-1998 |
| | | | US | 5999388 A | 07-12-1999 |
| FR 2013736 | A1 | 10-04-1970 | DE | 1933218 A1 | 20-08-1970 |
| | | | FR | 2013736 A1 | 10-04-1970 |
| | | | GB | 1264375 A | 23-02-1972 |
| | | | JP | 48019464 B | 13-06-1973 |
| | | | US | 3548256 A | 15-12-1970 |
| FR 1436174 | A | 22-04-1966 | NONE | | |

EPO FORM P0459

For more details about this annex : see Official Journal of the European Patent Office, No. 12/82

**EP 2 669 921 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0867998 B1

**26**